(19) Europäisches Patentamt
European Patent Office
Office européen des brevets

(11) **EP 0 771 842 A1**

(12) **EUROPÄISCHE PATENTANMELDUNG**

(43) Veröffentlichungstag:
07.05.1997 Patentblatt 1997/19

(51) Int. Cl.$^6$: **C08K 7/22**

(21) Anmeldenummer: 96117061.0

(22) Anmeldetag: 24.10.1996

(84) Benannte Vertragsstaaten:
AT BE CH DE ES FR GB IT LI NL SE

(30) Priorität: 02.11.1995 DE 19540886

(71) Anmelder: Wacker-Chemie GmbH
81737 München (DE)

(72) Erfinder:
• Brennenstuhl, Werner, Dr.
84508 Burgkirchen (DE)

• Mittermeier, Manfred
84561 Mehring (DE)
• Huber, Wilhelm
5121 Ostermiething (AT)

(74) Vertreter: Deffner-Lehner, Maria, Dr. et al
Wacker-Chemie GmbH,
Zentralabteilung PLM,
Hanns-Seidel-Platz 4
81737 München (DE)

(54) **Kompressibler Siliconkautschuk**

(57) Die Erfindung betrifft zu Elastomeren vernetzende Massen, die eine Viskosität von 1000 bis 100000 mPa · s haben, auf der Basis von

(A) Kunststoffhohlkörpern

(B) vernetzbaren Organosiliciumverbindungen.

## Beschreibung

Die Erfindung betrifft zu Elastomeren vernetzende Massen, ein Verfahren zu ihrer Herstellung, Form - und Dichtkörper, die aus diesen Massen hergestellt werden sowie ein Verfahren zu ihrer Herstellung.

Kompressibler Siliconkautschuk ist in US-A 5,258,212 beschrieben. Der dort beschriebene kompressible Silikonkautschuk enthält Hohlkügelchen aus Kunststoff, Glas oder Kieselglas. Dieser Siliconkautschuk wird verwendet, um ein Festplattengehäuse, mittels einer raupenartigen Dichtung, abzudichten, die mittels einer besonderen Vorrichtung aufgetragen wird.

In US-A 5,580,794 werden Siliconelastomere beschrieben, die Hohlkügelchen, die aus Epoxymaterial, Glas, Metall, Keramik und ähnlichen Materialien bestehen, enthalten. Diese Elastomere sollen als Dichtmaterialien eine verbesserte Öl- und Druckbeständigkeit zeigen.

In US-A 5,246,973 werden geschäumte Siliconelastomere zur Verfügung gestellt. Diese Elastomere werden unter Verwendung einer Mischung aus Siliconelastomer mit thermisch expandierbaren Hohlkügelchen, die in ihrem Inneren eine flüchtige Substanz, wie Butan oder Isobutan etc. enthalten, hergestellt. Diese Mischung wird erhitzt, um die flüchtigen Substanzen aus den expandierbaren Kohlkügelchen freizusetzen und das Siliconelastomer aufzuschäumen.

Aufgabe der Erfindung ist es, die Nachteile des Standes der Technik zu überwinden und insbesondere kompressible Siliconelastomere zur Verfügung zu stellen, die in einem einfachen, wirtschaftlichen Verfahren schnell hergestellt und verarbeitet werden können.

Gegenstand der Erfindung sind zu kompressiblen Elastomeren vernetzbare Organonsilicium-Massen, die eine Viskosität von 100 bis 100000 mPa.s haben, auf der Basis von

(A) Kunststoffhohlkörpern

(B) vernetzbaren Organosiliciumverbindungen.

Die erfindungsgemäßen Massen haben vorzugsweise eine Viskosität von 100 bis 100000 mPa·s, bevorzugt von 1000 - 60000 mPa·s und besonders bevorzugt von 5000 bis 20000 mPa·s.

Als Kunststoffhohlkörper (A) werden als Bestandteil I vorzugsweise Hohlkörper auf der Grundlage von organischem Polymermaterial, wie vorzugsweise Polyacrylnitril, Polyvinylchloride, Polyvinylacetate, Polyester, Polycarbonate, Polyethylene, Polystyrene, Polymethylmethacrylate, Polyvinylalkohole, Ethylcellulose, Nitrocellulose, Benzylzellulose, Epoxyharze, Hydroxypropylmethylcellulose-phthalat, Copolymere von Vinylchlorid und Vinylacetat, Copolymere von Vinylacetat und Celluloseacetatbutyrat, Copolymere von Styrol und Maleinsäure, Copolymere von Acrylnitril und Styrol, Copolymere von Vinylidenchlorid und Acrylnitril und ähnliche verwendet. Verfahren zur Herstellung derartiger Kunststoffhohlkörper sind bekannt, insbesondere werden derartige Verfahren in EP-B 348 372 (HCASCO NOBEL AG) und den dort zitierten US-A 3,615,972, US-A 4,397,799 und EP-A-112807 beschrieben.

Vorzugsweise handelt es sich um expandierte Kunststoffhohlkörper mit einem Durchmesser von 1 bis 800 μm, bevorzugt von 5-100 μm und besonders bevorzugt von 10 bis 80μm. Die Dichte beträgt an der Luft vorzugsweise 10 bis 100 kg/m$^3$, bevorzugt 20 bis 80 kg/m$^3$ und besonders bevorzugt 20 bis 60 kg/m$^3$. Ganz besonders bevorzugt sind die Kunststoffhohlkörper mit dem Handelsnamen Expancel 091 DE ein Produkt von Expancel Nobel Industries. Diese Kunststoffhohlkörper werden in Mengen von vorzugsweise 0,1 bis 30 Gew.%, bevorzugt von 0,2 bis 10 Gew.% und besonders bevorzugt von 0,5 bis 3 Gew.% verwendet.

Bei den erfindungsgemäßen Massen kann es sich um an sich bekannte additions-, kondensations- oder radikalisch vernetzende Siliconkautschukmassen handeln.

Die erfindungsgemäßen additionsvernetzenden Siliconkautschukmassen umfassen die Bestandteile:
Als (A) Bestandteil I Kunstoffhohlkörper wie oben definiert.
Als (B) vernetzbare Organosiliciumverbindung eine Mischung aus einem
(IIa) Polyorganosiloxan mit mindestens zwei Alkenylgruppen pro Molekül,
einem
(IIb) Polyorganosiloxan mit 2 endständigen Si-H-Gruppen
einem
(III) Polyorganosiloxan mit mindestens zwei SiH-Gruppen pro Molekül als Vernetzer und als Katalysator einen
(IV) Hydrosilylierungskatalysator.

Als Polyorganosiloxane (II) wird vorzugsweise eine Mischung aus einem Polydimethylsiloxan mit mindestens zwei endständigen Alkenylgruppen (IIa) und einem Polydimethylsiloxan mit mindestens zwei endständigen Si-H Gruppen verwendet.

Bestandteil (IIa) der erfindungsgemäßen Siliconkautschukmassen ist ein mindestens zwei Alkenylgruppen pro Molekül enthaltendes Polyorganosiloxan mit einer Viskosität bei 25°C im Bereich von vorzugsweise 100 bis 100000 mPa·s, bevorzugt von 200 bis 20000 mPa·s und besonders bevorzugt 500 bis 5000 mPa·s. Bestandteil (IIa) wird in Mengen, die vorzugsweise zwischen 10-98 Gew.% und bevorzugt zwischen 20-80 Gew.% und besonders bevorzugt 50-70 Gew.% liegen, eingesetzt.

Bestandteil (IIb) der erfindungsgemäßen Siliconkautschukmassen ist ein mindestens zwei endständige Si-H Gruppen pro Molekül enthaltendes Polyorganosiloxan mit einer Viskosität bei 25°C im Bereich von vorzugsweise 100 bis 100000 mPa·s, bevorzugt von 200 bis 20000 mPa·s und besonders bevorzugt 500 bis 5000 mPa·s. Bestandteil (IIb) wird in Mengen, die vorzugsweise zwischen 0-98 Gew.% und bevorzugt zwischen 5-70 Gew.% und besonders bevorzugt 20-40 Gew.% liegen, eingesetzt.

Das Polyorganosiloxan (II) ist aufgebaut aus Einheiten der Formel

$$R_a R^1_b SiO_{(4-a-b)/2'}$$

wobei a 0, 1 oder 2 ist, b 0, 1, 2 oder 3 ist, mit der Maßgabe, daß mindestens zwei Reste R in jedem Molekül vorhanden sind und die Summe (a+b) < 4 beträgt.

R stellt eine Alkenylgruppe oder ein Wasserstoffatom dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

$R^1$ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie Methyl, Ethyl, Propyl, Butyl und Hexyl, Cycloalkylgruppen, wie Cyclopentyl, Cyclohexyl und Cycloheptyl, Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

Die Alkenylgruppen können in jeder Position der Polymerkette, insbesondere an den endständigen Siliciumatomen, gebunden sein.

Bestandteil (IIa) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear, cyclisch oder auch verzweigt sein. Verzweigte Polyorganosiloxane enthalten neben monofunktionellen Einheiten, wie $RR^1_2SiO_{1/2}$ und $R^1_3SiO_{1/2}$, und difunktionellen Einheiten, wie $R^1_2SiO_{2/2}$ und $RR^1SiO_{2/2}$, auch trifunktionelle Einheiten, wie $R^1SiO_{3/2}$ und $RSiO_{3/2}$, und/oder tetrafunktionelle Einheiten der Formel $SiO_{4/2}$, wobei R und $R^1$ die oben dafür angegebene Bedeutung haben. Der Gehalt an diesen zu verzweigten Polyorganosiloxanen führenden tri- und/oder tetrafunktionellen Einheiten, der typischerweise sehr gering ist, d.h. weniger als 0,1 Mol-% beträgt, sollte 20 Mol-% nicht wesentlich überschreiten. Das Alkenylgruppen enthaltende Polyorganosiloxan kann auch Einheiten der allgemeinen Formel -OSi($R^2R^3$)$R^4$Si($R^2R^3$)O- enthalten, wobei sowohl $R^2$ als auch $R^3$ die vorstehend für R und $R^1$ angegebene Bedeutung haben und $R^4$ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Bestandteil (II) enthalten sein.

Besonders bevorzugt ist die Verwendung Vinylgruppen enthaltender Polydimethylsiloxane, deren Moleküle der Formel

$$(ViMe_2SiO_{1/2})_2(ViMeSiO)_a(Me_2SiO)_b$$

entsprechen, wobei a und b nichtnegative Zahlen sind und folgende Relationen erfüllen: a+1>0, 50<(a+b)<2200, vorzugsweise 200<(a+b)<1000, und 0<(a+1)/(a+b)<0,2.

Als Vernetzer (C) wird Bestandteil (III) bei der Additionsvernetzung der erfindungsgemäßen Siliconkautschukmasse eingesetzt, das vorzugsweise ein SiH-funktionelles Polyorganosiloxan ist, das aufgebaut ist aus Einheiten der nachfolgenden Formel

$$H_c R^1_d SiO_{(4-c-d)/2'},$$

wobei c 0, 1 oder 2 ist, d 0, 1, 2 oder 3 ist, mit der Maßgabe, daß die Summe (c+d) < 4 ist und daß mindestens zwei siliciumgebundene Wasserstoffatome pro Molekül vorhanden sind und $R^1$ die oben dafür angegebene Bedeutung hat.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Bestandteils (III) enthält das Alkenylgruppen enthaltende Polyorganosiloxan (II) vorzugsweise mindestens drei Alkenylgruppen pro Molekül.

Das Polyorganosiloxan (III) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,7 Gew.% Wasserstoff.

Das Polyorganosiloxan (III) enthält vorzugsweise mindestens drei und vorzugsweise höchstens 600 Siliciumatome pro Molekül. Besonders bevorzugt ist die Verwendung von SiH-Vernetzern, die zwischen 4 und 200 Siliciumatome pro Molekül enthalten.

Die Struktur des Polyorganosiloxans (III) kann linear, verzweigt, cyclisch oder netzwerkartig sein. Lineare und cyclische Polyorganosiloxane (III) sind aus Einheiten der Formel $HR^1_2SiO_{1/2}$, $R^1_3SiO_{1/2}$, $HR^1SiO_{2/2}$ und $R^1_2SiO_{2/2}$ zusammengesetzt, wobei $R^1$ die vorstehend dafür angegebene Bedeutung hat. Verzweigte und netzwerkartige Polyorganosiloxane (III) enthalten zusätzlich trifunktionelle Einheiten, wie $HSiO_{3/2}$ und $R^1SiO_{3/2}$, und/oder tetrafunktionelle Einheiten der Formel $SiO_{4/2}$. Mit zunehmendem Gehalt an tri- und/oder tetrafunktionellen Einheiten weisen diese Vernetzungsmittel eine netzwerkartige, harzartige Struktur auf. Die im Polyorganosiloxan (III) enthaltenen organischen Reste $R^1$ werden üblicherweise so gewählt, daß diese mit den im Bestandteil (II) befindlichen organischen Resten verträglich sind, so daß die Bestandteile (II) und (III) mischbar sind.

Als Vernetzer können auch Kombinationen und Mischungen der hier beschriebenen Polyorganosiloxane (III) verwendet werden.

Besonders bevorzugte Polyorganosiloxane (III) haben die Formel

$$(HR^1_2SiO_{1/2})_e(R^1_3SiO_{1/2})_f(HR^1SiO_{2/2})_g(R^1_2SiO_{2/2})_h,$$

wobei die nichtnegativen ganzen Zahlen e, f, g und h folgende Relationen erfüllen: $(e+f)=2$, $(e+g)>2$, $5<(g+h)<200$ und $0,1<g/(g+h)\leqq1$ und $R^1$ die oben dafür angegebene Bedeutung hat.

Das Polyorganosiloxan (III) ist vorzugsweise in einer solchen Menge in der härtbaren Silikonkautschuk-masse enthalten, daß das Molverhältnis von SiH-Gruppen zu Alkenylgruppen vorzugsweise zwischen 0,5 und 5, bevorzugt zwischen 1,0 und 3,0, liegt.

Bestandteil III wird in Mengen von 0,1 bis 15 Gew.%, bevorzugt in Mengen von 2 bis 8 Gew.% und besonders bevorzugt 3 bis 6 Gew.% eingesetzt.

Bestandteil (IV) dient als Katalysator für die Additionsreaktion (Hydrosilylierung) zwischen den Alkenylgruppen des Bestandteils (II) und den siliciumgebundenen Wasserstoffatomen des Bestandteils (III). In der Literatur wurden zahlreiche geeignete Hydrosilylierungskatalysatoren beschrieben. Prinzipiell können alle üblicherweise in additionsvernetzenden Siliconkautschukmassen eingesetzten Hydrosilylierungskatalysatoren verwendet werden.

Als Hydrosilylierungskatalysator können Metalle, wie Platin, Rhodium, Palladium, Ruthenium und Iridium, vorzugsweise Platin, die ggf. auf feinteiligen Trägermaterialien, wie Aktivkohle, Aluminiumoxid oder Siliciumdioxid, fixiert sind, eingesetzt werden.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbikarbonat in ethanolischer Lösung. Besonders bevorzugt sind Komplexe des Platins mit Vinylsiloxanen, wie sym-Divinyltetramethyldisiloxan.

Der Hydrosilylierungskatalysator kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten. Bei Verwendung gebräuchlicher Platin-Katalysatoren liegt der Gehalt der härtbaren Siliconkautschukmasse bezogen auf Platin-Metall vorzugsweise im Bereich von 0,1 bis 500 Gew.-ppm, vorzugsweise zwischen 10 und 100 Gew.-ppm Platin-Metall. Ansonsten wird der Katalysator gegebenenfalls zusammen mit einem Inhibitor vorzugsweise in Mengen von 0,01 bis 5 Gew.% eingesetzt.

Die erfindungsgemäßen kondensationsvernetzende Siliconkautschukmassen umfassen die Bestandteile:

Als (A) Kunststoffhohlkörper, wie oben als Bestandteil I definiert,

als (B) vernetzbare Organosiliciumverbindung eine Mischung aus einem

(V) kondensationsfähige Gruppen aufweisenden Polyorganosiloxan

einer (VI) Organosiliciumverbindung als Vernetzer, der mit der Feuchtigkeit der Luft bzw. OH-Gruppen des Organopolysiloxans bzw. der Füllstoffe reagiert und einem

(VII) Kondensationskatalysator.

Die erfindungsgemäß eingesetzten, kondensationsfähige Gruppen aufweisenden Organosiliciumverbindungen sind vorzugsweise solche der Formel

$$R^5O-[SiR^6_2O]_n-R \qquad (V),$$

worin

$R^5$ gleich oder verschieden sein kann und Wasserstoffatom oder Alkylrest mit 1 bis 6 Kohlenstoffatom(en) bedeutet, $R^6$ gleiche oder verschiedene Kohlenwasserstoffreste mit 1 bis 18 Kohlenstoffatom(en), die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und

n eine ganze Zahl von mindestens 30 ist.

Beispiele für Kohlenwasserstoffreste $R^6$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phen-anthrylrest; Alkarylreste, wie o-, m-, p-Tolylreste, Xylyl-reste und Ethylphenylreste; Aralkylreste, wie der Benzylrest, der α-und der β-Phenylethylrest.

Beispiele für substituierte Kohlenwasserstoffreste $R^6$ sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste $R^6$ sind Kohlenwasserstoffreste mit 1 bis 10 Kohlenstoffatom(en), wobei besonders bevorzugt mindestens 80 %, insbesondere mindestens 90 %, der Reste $R^6$ Methylreste sind.

Bevorzugte Reste R sind Wasserstoffatom und Alkylgruppen mit 1 bis 4 Kohlenstoffatom(en), wobei Wasserstoffatom, Methyl- und Ethylreste besonders bevorzugt sind.

Der Durchschnittswert für die Zahl n in Formel (V) ist vorzugsweise so gewählt, daß das Organopolysiloxan der Formel (V) eine Viskosität von mehr als 30 mPa·s, insbesondere von mehr als 1 000 mPa·s, jeweils gemessen bei einer Temperatur von 25°C, besitzt.

Obwohl in Formel (V) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R^6_3SiO_{1/2}$-, $R^6SiO_{3/2}$- und $SiO_{4/2}$-Einheiten, ersetzt sein, wobei $R^6$ die vorstehend dafür angegebene Bedeutung hat.

Die Polydiorganosiloxane gemäß Formel (V) können nach in der Fachwelt bekannten Verfahren, beispielsweise durch Polymerisation bzw. Kondensation niedermolekularer cyclischer bzw. linearer, hydroxy- und/oder alkoxyendblockierter Organopolysiloxane, hergestellt werden.

Hierzu sei beispielsweise auf W. Noll, "Chemistry and Technology of Silicones", 1968, Academic Press Inc., Seite 218 ff verwiesen.

Bei dem erfindungsgemäß eingesetzten, kondensationsfähige Gruppen aufweisenden Organopolysiloxan (V) kann es sich um eine einzelne Art wie auch um ein Gemisch aus mindestens zwei Arten derartiger kondensationsfähige Gruppen aufweisender Organopolysiloxane handeln.

Das Organopolysiloxan wird vorzugsweise in Mengen von 10 bis 98 Gew.%, bevorzugt von 60 bis 95 Gew.% und besonders bevorzugt von 80 bis 90 Gew.%. eingesetzt.

Als Vernetzer (VI) können vorzugsweise auch Silane der allgemeinen Formel

$$R^7_b SiX_{4-b} \qquad (VI)$$

sein, die mit der Feuchtigkeit der Luft bzw. OH-Gruppen des Organopolysiloxans bzw. der Füllstoffe reagieren, wobei
$R^7$ einen einwertigen, organischen Rest bedeutet,
X eine Gruppe wie Oximo, Acetoxy, Amino, Alkoxy, Benzamido und
b 0, 1, 2 oder 3 bedeutet.

Beispiele für Reste $R^7$ sind bevorzugt gegebenenfalls substituierte Kohlenwasserstoffreste mit 1 - 18 Kohlenstoffatom(en), besonders bevorzugt sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest; Nonylreste, wie der n-Nonylrest und iso-Nonylreste; Decylreste, wie der n-Decylrest und iso-Decylreste; Dodecylreste, wie der n-Dodecylrest und iso-Dodecylreste; Octadecylreste, wie der n-Octadecylrest und iso-Octadecylreste; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste, Ethylphenylreste, o-, m-, p-Vinylphenylreste und der Nonylphenylrest; und Aralkylreste, wie der Benzylrest, der α- und der β-Phenylethylrest; Isocyanalkylreste wie der Isocyanpropylrest, Isocyanethylrest, Isocyanhexylrest, Isocyanoctylrest, wobei der Isocyanpropylrest bevorzugt ist und (Meth)acryloxyreste wie der Methacryloxypropylrest, Acryloxypropylrest, Methacryloxyhexylrest, Acryloxyhexylrest, wobei der Methacryloxypropylrest bevorzugt ist.

Bei dem erfindungsgemäß eingesetzten Katalysator handelt es sich um einen Kondensationskatalysator (VII), bei dem es sich vorzugsweise um (Organo-)Metallverbindungen, wie beispielsweise die Salze von Carbonsäuren, die Alkoholate und die Halogenide der Metalle Pb, Zn, Zr, Ti, Sb, Fe, Cd, Sn, Ba, Ca und Mn, handelt. Besonders bevorzugt sind (Organo-)Zinnverbindungen von Carbonsäuren mit 1 bis 18 Kohlenstoffatom(en) sowie (Organo-)Zinnhalogenide, insbesondere Organozinnoctoate, -naphthenate, -hexoate, -laurate, -acetate, -bromide und -chloride.

Beispiele für solche (Organo-)Zinnverbindungen sind Zinn(II)octoat, Dibutylzinndilaurat, Octylzinntriacetat, Dioctylzinndioctoat, Dioctylzinndiacetat, Didecylzinndiacetat, Dibutylzinndiacetat, Dibutylzinndibromid, Dioctylzinndilaurat, Trioctylzinnacetat. Ganz besonders bevorzugt sind Diorganozinndicarboxylate, insbesondere Dibutylzinndilaurat, Dioctylzinndilaurat, Dibutylzinndiacetat und Dioctylzinndiacetat.

Der Bestandteil (VI) wird in Mengen von vorzugsweise 0,1 bis 15 Gew.%, bevorzugt 1 bis 10 Gew.% und besonders bevorzugt 2-5 Gew.% eingesetzt.

Bei dem erfindungsgemäß eingesetzten Kondensationskatalysator (VII) kann es sich um eine einzelne Art wie auch um ein Gemisch aus mindestens zwei Arten derartiger Kondensationskatalysatoren handeln.

Zur Herstellung der erfindungsgemäßen Massen wird Kondensationskatalysator (VII) in Mengen von vorzugsweise 0,01 bis 4 Gew.% , bevorzugt 0,1 bis 3 Gew.% und besonders bevorzugt 0,5 bis 1,5 Gew% eingesetzt.

Es können noch weitere Zusätze in den erfindungsgemäßen Masse enthalten sein, so können wahlweise weitere Zusätze zu einem Anteil von bis zu 85 Gew.-%, vorzugsweise zwischen 0,5 und 20 Gew.-%, in der Siliconkautschukmasse enthalten sein. Diese Zusätze können z.B. Füllstoffe, Dispergierhilfsmittel, Haftvermittler, Inhibitoren, Pigmente, Farbstoffe, Additive zur Erhöhung der Schwerbrennbarkeit, Weichmacher usw. sein. Hierzu zählen Zusätze, wie Quarzmehl, Diatomeenerde, Tone, Kreide, Lithopone, Ruße, Graphit, Metalloxide, -karbonate, -sulfate, Metallstäube, Fasern, Farbstoffe, Pigmente usw.

Beispiele für Füllstoffe sind verstärkende Füllstoffe, also Füllstoffe mit einer spezifischen Oberfläche nach BET von mindestens 50 $m^2$/g, vorzugsweise 50 - 500 $m^2$/g, wie pyrogen erzeugte Kieselsäure, unter Erhalt der Struktur entwässerte Kieselsäurehydrogele, also sogenannte "Aerogele", und andere Arten von gefälltem Siliciumdioxid; und nicht verstärkende Füllstoffe, also Füllstoffe mit einer spezifischen Oberfläche nach BET von weniger als 50 $m^2$/g, wie Quarzmehl, Diatomeenerde, Calciumsilikat, Zirkoniumsilikat, Zeolithe, Eisenoxid, Zinkoxid, Titandioxid, Aluminiumoxid, Calciumcarbonat, Magnesiumcarbonat, Zinkcarbonat, Ruß, Glimmer und Kreide. Die genannten Füllstoffe können hydrophobiert sein durch die Behandlung mit den vorstehend genannten Hydrophobierungsmitteln.

Beispiele für Weichmacher sind bei Raumtemperatur flüssige, durch Triorganosiloxygruppen endblokkierte Diorganopolysiloxane, wie durch Trimethylsiloxygruppen endblockierte Dimethylpolysiloxane mit einer Viskosität von 10 bis 10 000 mPa $\cdot$ s bei 25°C.

Insbesondere können harzartige Polyorganosiloxane, die im wesentlichen aus Einheiten der Formeln $R^1{}_3SiO_{1/2}$, $R^1SiO_{3/2}$ und/oder $SiO_{4/2}$, ggf. auch $R^1{}_2SiO_{2/2}$, bestehen, bis zu einem Anteil von 50 Gew.-%, vorzugsweise bis zu 20 Gew.-%, bezogen auf das Gesamtgewicht des Siliconkautschuks, enthalten sein. Das Molverhältnis zwischen monofunktionellen und tri- oder tetrafunktionellen Einheiten dieser harzartigen Polyorganosiloxane liegt vorzugsweise im Bereich von 0,5 : 1 bis 1,5 : 1. Es können auch funktionelle Gruppen, insbesondere Alkenylgruppen, in Form von $RR^1{}_2SiO_{1/2}$- und/oder $RR^1SiO_{2/2}$-Einheiten, enthalten sein.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphine, Phosphite, Nitrile, Diaziridine und Oxime.

Ein weiterer Gegenstand der Erfindung ist ein Verfahren zur Herstellung der erfindungsgemäßen Massen.

Die Herstellung der erfindungsgemäßen Massen erfolgt durch Vermischen der Bestandteile nach für die Bereitung von Siliconkautschukmassen üblichen Verfahren als 1 oder 2 Komponentenmassen.

Die Verarbeitung der erfindungsgemäßen Massen erfolgt mit üblichen 1-K- oder 2-K-Misch- und Dosierenanlagen.

Die kondensationsvernetzenden Massen werden vorzugsweise bei Raumtemperatur 25°C vernetzt.

Die additionsvernetzenden Massen werden vorzugsweise 5 min bis 24 h, bei vorzugsweise einer Temperatur von 25 bis 200°C, bevorzugt 5 min bis 1 h bei einer Temperatur von 100 bis 150°C vernetzt.

Ein weiterer Gegenstand der Erfindung sind kompressible Form-, Dichtkörper oder Vergußmassen, die aus den erfindungsgemäßen Massen oder den nach dem erfindungsgemäßen Verfahren hergestellten Massen hergestellt werden sowie Verfahren zu Ihrer Herstellung.

Aus den erfindungsgemäßen Massen lassen sich Vergußmassen und Formkörper, wie Dichtungen, z.B. O-Ringe, Rundschnüre, Platten herstellen, die insbesondere für einen Einsatzbereich geeignet sind, bei dem hohe Temperaturschwankungen auftreten, die in einem Bereich von 65 bis 250°C liegen. Derartige Temperaturschwankungen treten insbesondere beim Betrieb von Maschinen oder Fahrzeugen auf, die sich aufgrund ihres Betriebs erwärmen und/oder bei schwankenden Außentemperaturen eingesetzt werden. Dies trifft z.B. für alle Maschinen und Fahrzeuge zu, die mit Otto-Motoren betrieben werden, wie Kraftfahrzeuge, Baumaschinen, stationäre Maschinen, wie Generatoren etc.

Der Vorteil der erfindungsgemäßen Massen ist, daß diese im Gegensatz zu Silikonkautschukmassen, die keine Kunststoffhohlkörperchen enthalten, hoch kompressibel sind. Die Verbesserung der Kompressibilität ist im Vergleich zu Silikonkautschukmassen ohne Kunststoffhohlkörper um den Faktor 20 - 40 mal größer.

Dadurch wird erreicht, daß sehr viel niedrigere Drücke nötig sind, um eine Dichtheit der Gehäuse zu erzielen. Ein weiterer Vorteil der hohen Kompressibilität ist die Verminderung der thermomechanischen Spannungen bei Temperaturwechseln, da sich das Material zwar genauso bei Erwärmung, wie herkömmliche Massen, stark ausdehnt, aber, wenn es auf einen Widerstand trifft komprimiert es sich, ohne den Abstand zwischen den abzudichtenden Dichtflächen weiter zu vergrößern, so daß, wenn die Tempertur fällt, immer noch das gleiche Volumen, wie während der Ausdehnung, eingenommen wird. Dies bedeutet, eine Dichtung kann nicht undicht werden, wenn sie Temperaturänderungen ausgesetzt wird. Des weiteren kann ein derartiger Dichtkörper das abzudichtende Gehäuse in Folge einer Erwärmung nicht beschädigen, indem er das Gehäuse z.B. aufsprengt. Vielmehr wird die erfindungsgemäße Masse komprimiert.

Ein weitere Vorteil der erfindungsgemäßen Massen ist, daß sie sich leicht ohne aufwendige, teure Maschinen, wie zum Beispiel einer 2-Komponenten Schaumanlage, sondern mit einfachen Mitteln, wie einer 1-K Dosieranlage vergießen lassen, so daß sich Dichtungen, wie O-Ringe am Ort ihrer Verwendung herstellen lassen, indem sie in eine Form, wie z.B. eine Nut eingebracht werden und so am Ort ihrer Verwendung verbleiben, auch wenn der Gegenstand später auseinandergebaut wird. Durch diese Maßnahme wird verhindert, daß der O-Ring unbemerkt herausfällt und der Gegenstand ohne den O-Ring wieder zusammengebaut wird und dann aufgrund des fehlenden O-Rings Folgeschäden auftreten. Dies kann besonders bei Gegenständen, die in der Kraftfahrzeugselektrik eingesetzt werden, zu ungewollten Stillstandszeiten führen, wenn z.B. ein O-Ring bei einem Gegenstand der Kraftfahrzeugselektrik fehlt, das diesen gegen Feuchtigkeit abdichtet. Fehlt dieser O-Ring, so passiert es häufig, daS in diesen Gegenstand, z.B. aufgrund des fehlenden O-Rings, Feuchtigkeit eintritt und die Elektrik somit nicht mehr funktioniert und das Fahrzeug letzlich nicht mehr funktionsfähig ist.

Des weiteren lassen sich aus den erfindungsgemäßen Massen Vergußmassen herstellen. Diese können zum Beispiel verwendet werden, um elektronische Bauteile zu vergießen. Ein Vorteil dieser erfindungsgemäßen Vergußmassen ist, daß sie aufgrund ihrer Kompressibilität die elektronischen Bauteile trotz des hohen Wärmeausdehnungskoeffizienten der Silicone auch bei Temperaturwechsel nicht zerstören, wie es bei herkömmlichen Siliconmassen der Fall ist.

Ein weiterer Vorteil der erfindungsgemäßen Massen ist die im Vergleich zu herkömmlichen Siliconmassen deutlich niedrigere Dichte, die zu einer Gewichtsreduzierung der Bauteile führt, die u.a. bei KFZ-Anwendungen wünschenswert ist, da sie zur Kraftstoffeinsparung beiträgt.

Ein entscheidender Vorteil der erfindungsgemäßen, additionsvernetzenden Massen ist die durch die Verwendung des Si-H endständigen Dimethylpolysiloxans (IIb) fast beliebig einstellbare Shorehärte. Je nach Verhältnis der Dimethylpolysiloxane (IIa : IIb) lassen sich Shorehärten zwischen 0 und 50 realisieren. Entsprechend variabel können verschiedene Dichtkräfte eingestellt werden.

**Beispiele**

**Beispiel 1**

80 Teile eines in den endständigen Einheiten je eine Sigebundene Hydroxylgruppe aufweisenden Dimethylpolysiloxanes mit einer Viskosität von 1000 mPa·s werden in der Reihenfolge mit 10 Teilen eines in der Gasphase erzeugten Siliciumdioxids mit einer BET-Oberfläche von 200 $m^2$/g, mit 1 Teilen Expancell DE 91, mit 5 Teilen eines Oximosilanes, mit 0,6 Teilen eines Aminosilanes und 0,6 Teilen eines Kondensationskatalysators vermischt.

Es wird ein fließfähiger RTV-1 Siliconkautschuk mit einer Viskosität von 30000 mPa·s erhalten, der unter Ausschluß von Wasser lagerfähig ist.

Bei Zutritt von Luftfeuchtigkeit erhält man ein kompressibles Vulkanisat.

Folgende Werte wurden an 6 mm Vulkanisaten nach 28 Tagen bei Raumtemperatur ermittelt:

Dichte : 0.8 g/$cm^3$ Shore A: 26

Kraft um Vulkanisat um 5% zu komprimieren: 1,6 N/$mm^2$

Kraft um Vulkanisat um 25% zu komprimieren: 9 N/$mm^2$

**Vergleichsbeispiel 1**

Es wird die gleiche Masse in analoger Weise hergestellt, wie in Beispiel 1 beschrieben, jedoch enthält diese Masse kein Expancell DE 91.

Es wird ein fließfähiger RTV-1 Siliconkautschuk mit einer Viskosität von 10000 mPa·s erhalten, der unter Ausschluß von Wasser lagerfähig ist.

Folgende Werte wurden an 6 mm Vulkanisaten nach 14 Tagen bei Raumtemperatur ermittelt:

Shore A: 25

Kraft um Vulkanisat um 5% zu komprimieren: 10 N/$mm^2$

Kraft um Vulkanisat um 25% zu komprimieren: nicht möglich

**Beispiel 2**

63 Teile eines vinylendständigen Dimethylpolysiloxans mit einer Viskosität von 1000 mPa·s, 30 Teile eines Si-H-endständigen Dimethylpolysiloxans mit einer Viskosität von 1000 mPa·s, 2 Teile Expancell DE 91, 0,5 Teile Ethinylcyclohexanol, 0,2 Teile eines Platinkatalysators und 5 Teile eines Polymethylhydrogensiloxans werden gründlich miteinander vermischt.

Es wird ein fließfähiger, additionsvernetzender Siliconkautschuk mit einer Viskosität von 6000 mPa·s erhalten, der bei Raumtemperatur 6 Monate stabil ist, unter Temperatureinfluß zu einem kompressiblen Vulkanisat vernetzt.

Folgende Werte wurden an 20 mm dicken Vulkanisaten gemessen, die 1 h bei 150°C ausgehärtet wurden:

Dichte : 0,6 g/$cm^3$

Shore A: 8

Kraft um Vulkanisat um 5% zu komprimieren: 0,3 N/mm$^2$
Kraft um Vulkanisat um 25% zu komprimieren: 1,7 N/mm$^2$

**Vergleichsbeispiel 2**

Es wird die gleiche Masse in analoger Weise hergestellt, wie in Beispiel 2 beschrieben, jedoch enthält diese Masse kein Expancell DE 91.
Es wird ein fließfähiger, additionsvernetzender Siliconkautschuk mit einer Viskosität von 1000 mPa•s erhalten, der bei Raumtemperatur 6 Monate stabil ist, unter Temperatureinfluß zu einem kompressiblen Vulkanisat vernetzt.
Folgende Werte wurden an 20 mm dicken Vulkanisaten gemessen, die 1 h bei 150°C ausgehärtet wurden:
Dichte : 1,0 g/cm$^3$
Shore A: 10
Kraft um Vulkanisat um 5% zu komprimieren: 6 N/mm$^2$
Kraft um Vulkanisat um 25% zu komprimieren: nicht möglich

**Vergleichsbeispiel 3**

Es wird die gleiche Masse in analoger Weise hergestellt, wie in Beispiel 2 beschrieben, jedoch enthält diese Masse kein Si-H endständiges Dimethylpolysiloxan.
Es wird ein fließfähiger, additionsvernetzender Siliconkautschuk mit einer Viskosität von 6000 mPa•s erhalten, der bei Raumtemperatur 6 Monate stabil ist, unter Temperatureinfluß zu einem kompressiblen Vulkanisat vernetzt.
Folgende Werte wurden an 20 mm dicken Vulkanisaten gemessen, die 1 h bei 150°C ausgehärtet wurden:
Dichte : 0,6 g/cm$^3$
Shore A: 28
Kraft um Vulkanisat um 5% zu komprimieren: 1 N/mm$^2$
Kraft um Vulkanisat um 25% zu komprimieren: 5 N/mm$^2$

**Patentansprüche**

1. Zu Elastomeren vernetzende Massen, die eine Viskosität von 1000 bis 100000 mPa•s haben, auf der Basis von

    (A) Kunststoffhohlkörpern

    (B) vernetzbaren Organosiliciumverbindungen.

2. Zu Elastomeren vernetzende Massen, die eine Viskosität von 1000 bis 100000 haben, nach Anspruch 1, dadurch gekennzeichnet, daß die (A) Kunststoffhohlkörper eine Dichte von 10 bis 80 kg/m$^3$ und eine Teilchengröße von 5-200 μm haben.

3. Verfahren zur Herstellung von zu Elastomeren vernetzenden Massen nach Anspruch 1 oder 2, dadurch gekennzeichnet, daß die Komponenten A und B vermischt werden.

4. Form-, Dichtkörper oder Vergußmassen, dadurch gekennzeichnet, daß sie aus Massen nach Anspruch 1 oder 2 oder nach einem Verfahren nach Anspruch 3 hergestellt sind.

5. Verfahren zur Herstellung von Form-, Dichtkörpern oder Vergußmassen nach Anspruch 4, dadurch gekennzeichnet, daß Massen nach Anspruch 1 oder 2 oder hergestellt nach Anspruch 3 in eine Form gegossen werden.

6. Verfahren nach Anspruch 5 zur Herstellung eines Dichtkörpers, dadurch gekennzeichnet, daß als Form eine Nut verwendet wird.

7. Verwendung der Massen nach einem oder mehreren der Ansprüche 1 bis 3 zur Herstellung von Form-, Dichtkörpern oder Vergußmassen.

Europäisches
Patentamt

**EUROPÄISCHER RECHERCHENBERICHT**

Nummer der Anmeldung

EP 96 11 7061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,D | US-A-5 258 212 (TOMARU ET AL)<br>* Spalte 3, Zeile 28 - Zeile 34 *<br>* Spalte 4, Zeile 15 - Zeile 22 *<br>* Spalte 4, Zeile 58 - Zeile 68 *<br>* Spalte 5, Zeile 36 - Zeile 40 *<br>--- | 1-4,7 | C08K7/22 |
| X,P | EP-A-0 722 989 (DOW CORNING)<br>* Seite 3, Zeile 8 - Zeile 22 *<br>* Seite 3, Zeile 57 - Zeile 58 *<br>* Seite 5, Zeile 27 - Zeile 28 *<br>--- | 1-4,7 | |
| X<br>Y | US-A-5 202 362 (HERMELE)<br>* Abbildung 2; Tabelle 1 *<br>--- | 1-5,7<br>6 | |
| Y | EP-A-0 596 677 (GENERAL ELECTRIC)<br>* Anspruch 1 *<br>--- | 6 | |
| X | EP-A-0 186 493 (KABUSHIKI)<br>* Seite 2, Zeile 9 - Zeile 20 *<br>--- | 1-4,7 | |
| X | EP-A-0 553 843 (DOW TORAY)<br>&US5246973(D)<br>* Ansprüche 3,4 *<br>----- | 1-4,7 | **RECHERCHIERTE SACHGEBIETE (Int.Cl.6)**<br><br>C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 4.Februar 1997 | Lentz, J |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
   Dokument

EPO FORM 1503 03.82 (P04C03)